# EUROPEAN PATENT SPECIFICATION

(11) **EP 1 240 063 B1**
(45) Date of publication and mention of the grant of the patent: **10.12.2003**
(21) Application number: 00969705.3
(22) Date of filing: 24.10.2000
(51) Int. Cl.: B61G 9/16, B61G 9/08

(54) **A HYDRO-PNEUMATIC CUSHIONING DEVICE**
HYDROPNEUMATISCHE DÄMPFUNGSVORRICHTUNG
DISPOSITIF AMORTISSEUR HYDROPNEUMATIQUE

(30) Priority: 25.10.1999 GB 9925196
(43) Date of publication of application: 18.09.2002
(73) Proprietor: Oleo International Limited, Exhall, Coventry CV7 9ND (GB)
(72) Inventor: BUSHNELL, John, James, Warwickshire CV47 1EG (GB)
(74) Representative: Powell, Timothy John
(86) International application number: GB0004093
(87) International publication number: WO01030631

(56) References cited:
- US-A- 3 411 635
- US-A- 3 412 870
- US-A- 3 917 075
- US-A- 4 113 113

## Description

This invention relates to a hydro-pneumatic cushioning device for use in an energy absorbing device such as an end-of-car coupler for a railway vehicle, the cushioning device comprising structure forming a cylinder chamber which has two ends, one of which is closed, and which is filled with hydraulic fluid when the device is in use, a hydraulic fluid reservoir, metering means which provide metered communication between the cylinder chamber and the reservoir, a piston comprising a piston head which is slidable within the bore of the cylinder chamber and a piston rod which is slidable within structure which forms the other end of the cylinder chamber, the arrangement being such that movement of the piston away from a location within the cylinder chamber which the piston adopts when the device is not loaded displaces hydraulic fluid from the cylinder chamber to the reservoir through said metering means, there being one-way valve means operable to allow flow of hydraulic fluid from the reservoir to the cylinder chamber and a space which is filled with gas when the device is in use and which is arranged so that the gas acts through the hydraulic fluid to urge the piston towards said location when the device is not loaded. Such a device is referred to as a "hydro-pneumatic cushioning device of the kind referred to" in the rest of the description.

US Patents Nos. 3,589,528 (Stephenson), 3,791,534 (Stephenson) and 3,854,596 (Stephenson et al) each disclose an end-of-car coupler for a railway vehicle which incorporates a hydro-pneumatic cushioning device of the kind referred to above. It is observed in US Patent 3,854,596 that such cushioning devices inherently posses a disadvantage of running solid even under small loads if they are impacted over a substantial time frame. By the invention that forms the subject of US Patent 3,854,596, an elastomeric pad is provided between structure of the coupler in which the coupler pin is mounted (that being the pin on which the coupler bar is journalled) and the closed end of the cylinder of the cushioning device which is housed in that structure. The elastomeric pad is provided to obviate this disadvantage but there is virtually no energy absorption in the draft direction. This is because, as is indicated by both of US Patents 3,589,528 and 3,791,534, the predetermined neutral position is the position at which the piston head engages the draft extremity of the cylinder space, that is to say the structure that forms the other end of the cylinder chamber. Also the axial thickness of the elastomeric pad is small so that little energy is absorbed in compressing it.

External coil springs are provided as a restoring mechanism. They are unsatisfactory because they do not have sufficient strength, are very highly stressed and tend to break, and are clumsy and difficult to install.

US 3,411,635 proposes a hydro-pneumatic cushioning device similar to the kind referred to above, except for the omission of one-way valve means operable to allow flow of hydraulic fluid from the reservoir to the cylinder chamber.

A disadvantage of this arrangement is that the device is unable to absorb an appreciable amount of energy in the draft direction.

According to a first aspect of the invention there is provided a hydro-pneumatic cushioning device for use in an energy absorbing device such as an end of car coupler for a railway vehicle, the cushioning device comprising structure forming a cylinder chamber which has two ends, one of which is closed, and which is filled with hydraulic fluid when the device is in use, a hydraulic fluid reservoir, metering means which provide metered communication between the cylinder chamber and the reservoir, a piston comprising a piston head which is slidable within the bore of the cylinder chamber and a piston rod which is slidable within a structure which forms the other end of the cylinder chamber, the arrangement being such that movement of the piston away from a location within the cylinder chamber which the piston adopts when the device is not loaded displaces hydraulic fluid from the cylinder chamber to the reservoir through said metering means, there being a space which is filled with gas when the device is in use and which is arranged so that the gas acts through the hydraulic fluid to urge the piston towards said location when the device is not loaded, characterised in that the device includes one-way valve means operable to allow flow of hydraulic fluid from the reservoir to the cylinder chamber and in that resiliently-biassed abutment means are provided within the cylinder chamber between the piston head and the structure that forms said other end of the cylinder chamber, the abutment means being operable to be abutted by the piston head as it moves towards said other end whereby to establish said location as a predetermined neutral position of the piston head spaced from the structure that forms said other end of the cylinder chamber and to be displaced against the resilient bias by movement of the piston head in the draft direction whereby the device can absorb energy in the draft direction.

An advantage of this arrangement is to improve the energy absorption characteristics of a hydro-pneumatic cushioning device of the kind referred to in the draft direction.

Preferably said hydro-pneumatic cushioning device includes means operable to reduce the velocity of the piston as it approaches the predetermined neutral position which conveniently comprise conduit means formed by said structure so as to communicate with said cylinder chamber and means operable to restrict communication between said conduit means and said cylinder chamber as said piston approaches the predetermined neutral position, such communication being substantially unrestricted when the piston is displaced substantially from said predetermined neutral position.

Preferably the abutment means comprise a floating plunger which is slidable in a cavity formed in the structure that forms said other end and which is urged towards said piston head by said resilient bias.

If said resilient bias comprises compressed gas entrapped in said cavity by the floating plunger, that cavity has to be separately filled with high pressure gas. Also, it is necessary to provide the floating plunger with dynamic seals suitable for preventing the high pressure gas on one side of the plunger from mixing with the hydraulic fluid on the other side thereof which will be loaded during certain phases of operation of the device, and that is a difficult objective to achieve. The floating plunger may be tubular and the cavity annular.

In one preferred embodiment of the invention the tubular floating plunger is slidable on the piston rod.

In another preferred embodiment of the invention the tubular plunger carries an annular piston which slides within a further cylinder space which comprises part of said cavity and which is isolated from said cylinder chamber by the structure that forms the said other end.

If said gas filled space is part of the reservoir so that there is a direct gas/hydraulic fluid interface, there is a tendency for hydraulic fluid to be lost. Hence, in a preferred embodiment of this invention, an at least partly displaceable wall is provided as a boundary of said space whereby it is separated from hydraulic fluid in the reservoir. Preferably said space is another cylinder chamber which is formed in the closed end of the first mentioned cylinder chamber and said at least partly displaceable wall comprises a floating piston which is slidable in that other cylinder chamber.

Preferably conduit means are provided whereby said further cylinder space on the side of said annular piston remote from the cylinder chamber is in communication with the side of said at least partly displaceable wall remote from said space.

In a further embodiment of the invention, the reservoir is an annular chamber which coaxially surrounds said cylinder chamber and said metering means comprise metering holes in the cylindrical wall of the cylinder chamber which are spaced from one another in a direction which is parallel to the axis of the cylinder chamber, conduit means being formed in the structure that forms the closed end of the cylinder chamber whereby the annular chamber communicates with the side of said at least partly displaceable wall remote from said space.

Preferably conduit means which communicate with said cylinder space place the cylinder space and the coaxially surrounding annular chamber in communication when the piston is displaced substantially from the predetermined neutral position.

Conveniently a valve is fitted into each metering hole, each valve being operable to inhibit passage of hydraulic fluid through the respective metering hole when a force which is less than a predetermined threshold force is applied to urge the piston axially within the cylinder chamber and to open to allow displacement of hydraulic fluid between the cylinder chamber and the reservoir when a force which is greater than a predetermined threshold force is applied to urge the piston into the cylinder chamber.

US Patent No. 5,487,480 describes a hydro-pneumatic cushioning device of the kind referred to, in which the reservoir comprises an annular chamber which coaxially surrounds the cylinder chamber and said metering means comprising metering holes in the cylindrical wall of the cylinder chamber which are spaced from one another in a direction which is parallel to the axis of the cylinder chamber, wherein a valve is fitted into each metering hole, each valve being operable to inhibit passage of hydraulic fluid through the respective metering hole when a force which is less than a predetermined threshold force is applied to urge the piston axially within the cylinder chamber and to open to allow displacement of hydraulic fluid between the cylinder chamber and the reservoir when a force which is greater than the predetermined force is applied to urge the piston into the cylinder chamber. Each valve preferably comprises an obturating member which is a differential area piston, the larger surface area of which is exposed to the interior of the reservoir and the smaller diameter end portion of which is adapted to seat on the perimeter of the respective metering hole when the valve closes the metering hole. This obviates the disadvantage of the coupler running solid if even small loads are applied to the piston over a substantial time frame, when those loads are applied to the coupler in buff. However they have no effect in draft because the neutral position of the piston is in abutment with the structure that forms said other end of the cylinder chamber. On the other hand, the use of such valves in a hydro-pneumatic cushioning device of the kind referred to which embodies this invention will be beneficial in reducing the risk of the coupler going solid in draft, providing there are metering holes to which such valves are fitted, between the neutral position of the piston and the other end. Moreover, any such metering hole with such a valve fitted therein will contribute to energy absorption in draft.

In another embodiment of this invention part of the reservoir is formed between said cylinder chamber and said space from which it is separated by said at least partly displaceable wall, and the metering means comprises at least one valve which is operable to inhibit passage of hydraulic fluid through a respective orifice when a force which is less than a predetermined threshold force is applied to urge the piston axially within the cylinder chamber and to open to allow displacement of hydraulic fluid between the cylinder chamber and the reservoir through said orifice when a force which is greater than the predetermined threshold force is applied to urge the piston into the cylinder chamber, the orifice being formed in structure which separates the reservoir from said cylinder chamber.

Conveniently the or each valve comprises an obturating member which is a differential area piston, the larger surface area of which is exposed to the interior of the reservoir and the smaller diameter end portion of which is adapted to seat on the perimeter of the respective hole or orifice when the valve closes that hole or orifice.

Preferably the metering means further comprises a metering pin which is mounted in the structure that separates the reservoir from said cylinder chamber and which projects coaxially into a closed ended cylindrical chamber formed in the piston, the metering pin cooperating with the mouth of the closed ended cylindrical chamber to provide a velocity dependent control of flow of fluid into the closed ended cylindrical chamber.

The metering pin may comprise the outer of two tubes, the inner tube extending within the outer, the annular space between the two tubes being in communication with the reservoir through one said valve whereby to provide a flow path for a metered flow of fluid displaced from said cylinder chamber when the device is operated in buff and the bore of the inner tube being in communication with the reservoir via another said valve whereby, together with orifices of flow controlling dimensions which control flow into said closed ended cylindrical chamber from cylinder spaces on the opposite side of the piston head of said piston from said cylinder chamber to provide a flow path for a metered flow of fluid displaced from said cylinder spaces on the opposite side of the piston head to the reservoir when the device is operated in draft, one-way valve means being provided to allow flow from the reservoir to the respective cylinder spaces on either side of the piston head.

The conduit means formed by said structure so as to communicate with said cylinder chamber conveniently provide a restricted flow path between the annular cylinder space on the opposite side of said piston head and said cylinder space which by-passes said valves when it is open. The conduit means may place said closed ended cylindrical chamber in restricted communication with the annular cylinder space on the opposite side of said piston head from said cylinder chamber. The conduit means may be closed by piston means carried by said metering pin and slidable in said closed ended cylinder chamber.

A preferred form of hydro-pneumatic cushioning device in which this invention is embodied has the advantage that it can be fitted into the existing end of car coupler structure of a railroad wagon with no more than minor modifications. Also the stroke of the floating plunger is sufficient to provide a useful amount of energy absorption in draft.

Two forms of a cushioning device in which this invention is embodied which is for putting into a railway vehicle end of car coupler and a modified form of one of them will be described now by way of non-limiting example, with reference to the accompanying drawings, of which:-
Figure 1 is a transverse section of one of the cushioning devices with the piston shown in the neutral position;

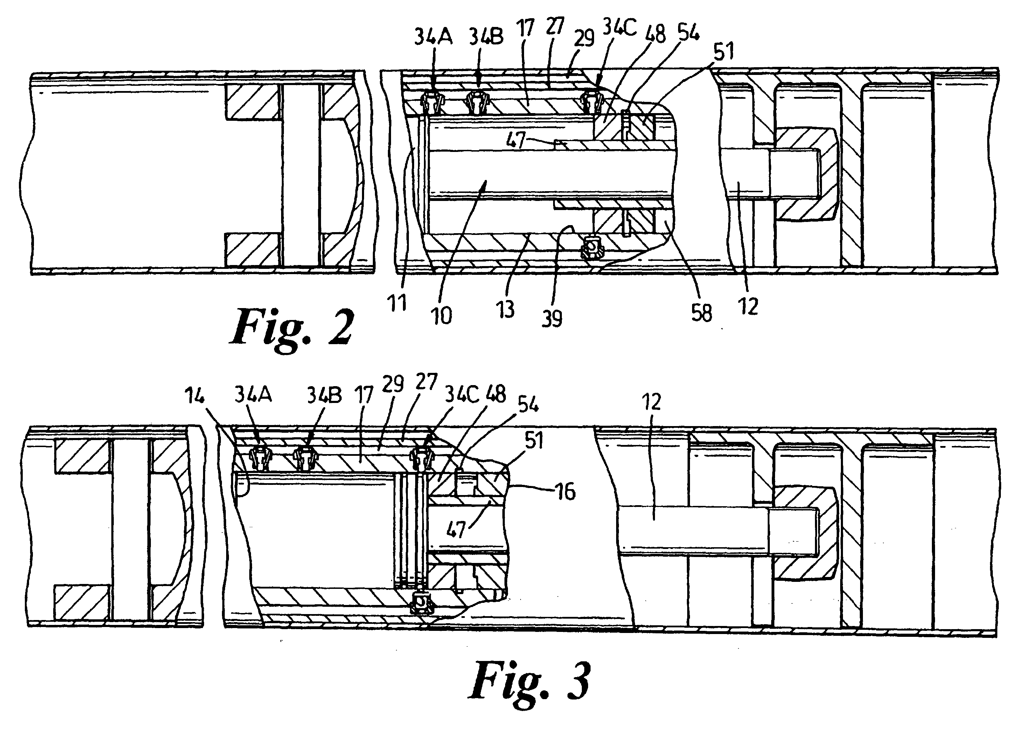

Figure 2, shows the device of Figure 1 partly sectioned, partly in elevation and part broken away, the device being fitted into an end of car coupler and fully contracted in buff;
Figure 3 is a view similar to Figure 2 showing the device fully extended in draft;
Figure 4 is a transverse section of the other form of the cushioning devices;
Figure 5 is a section on the line V-V in Figure 4; and
Figure 6 is a view similar to Figure 4 of a modified form of the cushioning device shown in Figure 4.

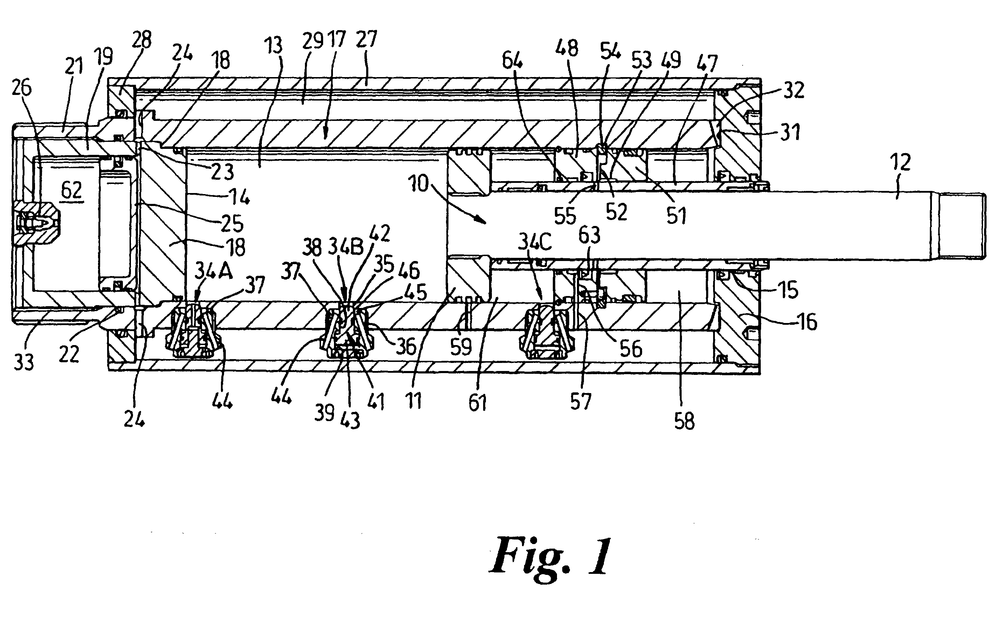

Figure 1 shows that the cushioning device comprises a piston 10 which has a piston head 11 and a piston rod 12. The piston head 11 slides in a cylinder 13 which is closed at one end 14. The piston rod 12 extends through a central aperture 15 formed by an annular end plate 16 at the other end of the cylinder 13.

The cylinder 13 is formed by a tube 17. The closed end 14 of the cylinder 13 is formed by an end plate 18 which is fitted in the bore of the tube 17 at a location which is spaced axially from the end of the tube 17 that is remote from the annular end plate 16. A single-ended cylinder 19 is screwed into the end of the tube 17 so that it abuts the end plate 18 at its open end. An O-ring 22 in a circumferential groove formed in the bore of the tube 17 seats on a portion of the outer cylindrical surface of the single-ended cylinder 19 between its external screw thread and the end plate 18 whereby to seal against leakage of fluid between the single-ended cylinder 19 and the tube 17.

Radial grooves 23 formed in the brim of the single-ended cylinder 19 provide conduit communication between the interior of the single-ended cylinder 19 and radial passages 24 which extend through the tube 17. A floating piston 25 slides within the cylinder 19 which is provided with a gas inflation valve 26 in its base.

The portion of the tube 17 that forms the cylinder 13 is ported. An outer tube 27 co-axially surrounds the ported portion of the tube 17. The annular end plate 16 is screwed into one end of the outer tube 27 and another annular end plate 28 is fitted into the outer tube 27 at the other end and welded therein. The other annular end plate 28 is fitted in a fluid-tight manner on the outer surface of the tube 17 at a location which is spaced axially from the annular end plate 16 by a distance which is a little further from the annular end plate 16 than are the radial passages 24. Hence the other annular end plate 28 co-axially surrounds a part of the cylindrical interior of the single-ended cylinder 19 which is between the threaded portion of the bore of the tube 17 and the end plate 18.

An annular space 29 is formed between the ported portion of the tube 17 and the outer tube 27 and is a low pressure reservoir for hydraulic fluid being closed at either end by the annular end plates 16 and 28. The annular reservoir 29 is in conduit communication with the cylinder space formed within the single-ended cylinder 19 between the end plate 18 and the floating piston 25 via the radial grooves 23 and radial passages 24. The end of the tube 17 remote from the single-ended cylinder 19 is spigotted into an annular groove 31 which is formed in the inner radial face of the annular end plate 16. A radial groove 32 is formed in the end portion of the tube 17 that is seated in the annular groove 31.

The end portion of the tube 17 that surrounds the single-ended cylinder 19 is formed with an external screw thread 33 which is for connecting to the hook portion of the coupler.

Each port 34A-34C of the ported portion of the tube 17 comprises a metering hole. It has an inner end bore portion 35 which forms an orifice and a tapped intermediate diameter bore portion 36. An annular valve body 37, which has a stepped outer surface, is screwed into the intermediate diameter bore portion 36. The bore of the annular valve body 37 is stepped. The stepped bore has an intermediate portion 38 which is between two larger diameter end bore portions. The radially outer larger diameter end bore portion is referenced 39.

A solid stepped piston 41 is a sliding fit in the bore portions 38 and 39 of the annular valve body 37 and its smaller end 42 is adapted to seat in the orifice 35 so as to serve as an obturating member. The larger diameter end 43 of the stepped piston 41 slides in the larger diameter end bore portion 39 and has a cross-sectional area which is several times larger than the cross-sectional area of the orifice 35.

Passages 44 are formed through the annular valve body 37 for flow between an annular chamber 45 and the reservoir 29, the annular chamber 45 being formed by the radially inner of the two larger diameter end bore portions of the stepped bore of the annular valve body 37 and being bounded by the shoulder 46 that is formed between the orifice 35 and the intermediate diameter bore portion 36 of the metering hole 34A-34C.

Non-return valves (not shown) in the ported portion of the tube 17 allow one-way liquid flow from the reservoir 29 into the cylinder chamber 13 either side of the piston head 11.

A tubular plunger 47 is a sliding fit in the bore of the annular end plate 16 and in the central aperture of a ring 48 which is fitted into the cylinder 13 between the piston head 11 and the annular end plate 16. An annular seal 64 is mounted in an annular groove which is formed in the central aperture of the ring 48 nearer to the end thereof that is nearer to the piston head 11. The annular seal 64 cooperates with the outer surface of the tubular plunger 47 to seal against passage of hydraulic fluid between them. The rod 12 is a sliding fit in the bore of the tubular plunger 47 and projects from it beyond the end plate 16 to which it may be connected by the usual flexible boot (not shown).

The radially outer surface of the tubular plunger 47 is stepped to form a radially outwardly projecting annular land 49 between the ring 48 and the annular end plate 16.

An annular piston 51 which has a stepped bore, is fitted onto the outer surface of the tubular plunger 47 so that the land 49 is a tight fit in the larger diameter bore portion of the annular piston 51 and the adjacent portion of the tubular plunger 47 that extends towards the annular end plate 16 is a tight fit within the smaller diameter bore portion of the annular piston 51. The end of the annular piston 51 adjacent the ring 48 is rebated to form a radially inner annular flange 52. A stop ring 53 is fitted within a circumferential groove 54 and is abutted by the radially outer portion of the ring 48. In addition to a primary function of locating the tubular plunger 47 and thus the piston head 11 in a predetermined neutral position when the cushioning device is in an unloaded state, as is described below, the stop ring 53 serves to space the annular piston 51 from the ring 48, that space being in communication with a radial passage 55 which extends through the tubular plunger 47.

A radial passage 56 extends through the ring 48, communicating at its radially inner end, which is between the annular seal 64 and an annular lip seal 63, with the sliding interface between the tubular plunger 47 and the ring 48 and at its radially outer end, which is between the annular seal 64 and the annular lip seal 63, with a further radial passage 57 which extends through the tube 17 and which opens at its other end in the annular reservoir 29.

The effective area of the annular piston 51 that is exposed to liquid pressure within the annular cylinder space 58 that is formed between the tubular plunger 47 and the tube 17 as well as between the annular piston 51 and the annular end plate 16 is greater than that encompassed by the portion of the tubular plunger 47 that forms the radially inner boundary of that cylinder space 58.

The annular space between the ring 48 and the annular piston 51 is vented to atmosphere through the radial passage 55 and the sliding interface between the bore of the tubular plunger 47 and the piston rod 12. Such venting to atmosphere could be restricted or controlled by a valve (not shown).

A further radial passage 59 is formed through the ported portion of the tube 17 between the ports 34B and 34C. The latter port 34C communicates with the annular cylinder space 61 that is formed around the tubular plunger 47 between the piston head 11 and the ring 48.

The piston head 11 is provided with three axially-spaced metallic piston rings which would not be damaged during passage over the ports 34A-C. The outer two piston rings are split rings which allow restricted flow past them towards the middle piston ring which is circumferentially continuous and which seals against fluid flow past it.

In operation, the cylinder space 62 formed between the floating piston 25 and the closed end of the single ended cylinder 19 contains compressed gas.

The cylinder chamber 13 formed by the ported portion of the tube 17, including the annular cylinder spaces 58 and 61, as well as the annular reservoir 29 which communicates with the annular cylinder space 58 via the radial groove 32 and the cylinder space that is formed between the floating piston 25 and the end plate 18 which communicates with the reservoir 29 via the radial grooves 23 and radial passages 24 are filled with hydraulic fluid.

In the unloaded state of the cushioning device, the compressed gas in the cylinder space 62 urges the floating piston 25 towards the end wall 18 and thereby pressurises hydraulic fluid in the reservoir 29, hydraulic fluid in the radial groove 32 and in the cylinder space 58 so as to urge the annular piston 51 against the stop ring 53 and thereby urge the tubular plunger 47 against the piston head 11 whereby to locate the piston head 11 in the predetermined neutral position of the piston 10 within the cylinder 13. In this position, the circumferentially continuous central piston ring of the piston head 11 covers the radial passage 59 as shown in Figure 1. The stepped pistons 41 are seated by the action of the hydraulic fluid in the annular reservoir 29 so that the orifices 35 are closed.

When a force, either buff or draft, is imposed on the coupler, the piston head 11 is urged away from the predetermined neutral position by that force. However the valves 34A-34C remain seated for as long as that force is below a certain predetermined level so that the piston head 11 does not move. This is because hydraulic fluid is locked in the annular cylinder space 61. The valves 34A-34C will be unseated when the force on the coupler reaches the predetermined level so that hydraulic fluid is then forced through the orifice 35, the annular chambers 45 and the passages 44 into the annular chamber 29 dissipating energy in so doing. That flow of liquid into the chamber 29 displaces liquid from the chamber 29 through the radial passages 24 and the radial grooves 23 into the cylinder space between the floating piston 25 and the end wall 18 so that the gas in the cylinder space 62 is compressed further, thereby providing a recoil force to force the hydraulic fluid back through the radial grooves 23, radial passages 24, annular chamber 29 and radial groove 32 into the cylinder space 58 when the force imposed on the coupler is released.

Some of the hydraulic fluid displaced from the cylinder 13 in buff will enter the annular cylinder space 61 through the respective non-return valve and through the passage 59 once the radially inner end of the latter is uncovered by the central piston ring of the piston head 11, the remainder passing through the radial passages 24 and the radial grooves 23 into the cylinder space between the floating piston 25 and the end wall 18.

The metering ports 34A-34C are arranged in the ported portion of the tube 17 so that the peak coupler force relative to the railroad car on which the coupler is mounted does not exceed a certain maximum force at low speed. The design to form this envelope for a particular form of end of car coupler which incorporates a cushioning device in which this invention is embodied is such that for speeds up to 12.9 km/hour (8 miles/hour) the peak coupler force should not fall below 6900 Newtons (50,000 pounds). This is achieved by the action of the valve fitted into each of the metering holes 34A-34C, 6900 Newtons (50,000 pounds) being the force required to unseat the differential area stepped pistons 41. In this case, the arrangement of metering holes 34A-34C is designed to limit the maximum peak coupler force relative to the rail car to 20.700 Newtons (150,000 pounds) for speeds below 6.4 km/hour (4 miles/hour), and to a progressively increasing maximum which rises from 20.700 Newtons (150,000 pounds) at 12.9 km/hour (8 miles/hour).

When the piston 10 is returned, after having been displaced in buff, a certain volume of hydraulic fluid is displaced from the annular cylinder space 61 through the passage 59 into the chamber 29. However that certain volume is less than the volume of hydraulic fluid that enters the cylinder space 13 behind the piston head 11 through the respective non-return valve, the remainder of the volume of hydraulic fluid that so enters the cylinder space 13 from the chamber 29 is made up by the volume of hydraulic fluid that is displaced from the cylinder space between the floating piston 25 and the end wall 18 by expansion of the compressed gas in the cylinder space 62 that accompanies release of the force that was imposed on the coupler in buff. Such return movement of the piston 10 continues until the piston 10 is held in the predetermined neutral position by the tubular plunger 47 with which it was brought into abutment during the final stage of the return movement, the tubular plunger 47 being urged into that position by the action of the compressed gas in the cylinder space 62 acting through hydraulic fluid in the annular space 29 and the cylinder space 58. The tubular plunger 47 thereby serves as a resiliently-biassed abutment for the piston 10.

When the piston 10 is displaced from the predetermined neutral position in the draft direction, which occurs once the stepped piston 41 of the valve 34C has been unseated by the load on the coupler in draft reaching the predetermined level, hydraulic fluid in the annular cylinder space 58 is displaced through the radial groove 32 into the annular space 29 and from there to the space between the floating piston 25 and the end plate 18 via the radial passages 24 and radial grooves 23, thus further compressing the gas in the cylinder space 62. Liquid is also displaced from the annular cylinder space 61 to the annular chamber 29 and liquid enters the cylinder space 13 behind the piston head 11 from the annular chamber 29 through the respective non-return valve. When the external force is removed, the compressed gas in the cylinder chamber 62 expands and acts through hydraulic fluid between the floating piston 25 and the end plate 18, and in the annular space 29 so as to return hydraulic fluid to the annular cylinder space 58 via the radial groove 32 and force the tubular plunger 47 and the piston head 11 back to the predetermined neutral position. The passages 56 and 57 through the ring 48 and the ported portion of the tube 17 provide an escape passage for high pressure oil which may pass the annular seal 64 acting between the ring 48 and the chamber 61.

The radial passage 59 vents the interior of the cylinder 13 to the annular space 29 when uncovered by the piston head 11. It is covered by final return movement of the piston head 11 to the neutral position under recoil and in being so covered, it further cushions the final movement of the piston head 11 back into contact with the tubular plunger 47. The dimensions of the passage 59 are selected so that the velocity of the piston 10 is controlled by the flow of hydraulic fluid through the passage 59 as the piston 10 approaches the predetermined neutral position in either direction, the piston 10 slowing down as it approaches the predetermined neutral position at which the piston 10 comes to rest. The slowing down of the piston 10 is due to restriction of flow of hydraulic fluid to the radial passage 59. Such flow is restricted initially by the leading edge of the piston head 11 traversing the inner end of the radial passage 59 and then, as the leading one of the outer split rings traverses the inner end of the radial passage 59 and until that passage 59 is blocked by the circumferentially continuous middle piston ring, such flow is restricted by that leading split piston ring.

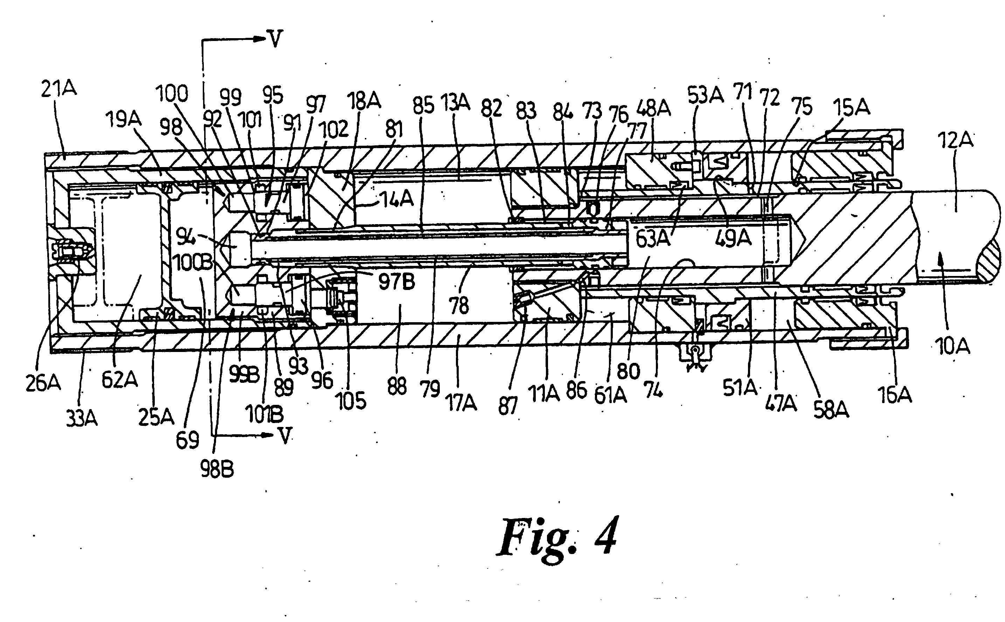

Figure 4 shows another form of hydropneumatic cushioning device in which a piston 10A which slides within a cylinder 13A is located in a predetermined neutral position by a resiliently-biassed tubular plunger 47A which slides within a ring 48A mounted within a tube 17A which forms the cylinder 13A. The tubular plunger 47A also slides on the piston rod 12A with which it extends through a central aperture 15A of an annular end plate 16A at one end of the tube 17A. The tubular plunger 47A carries an annular piston 51A between the ring 48A and the annular end plate 16A. The space 58A between the annular piston 51A and the annular end plate 16A is in communication under certain operating conditions with a cylinder space 69 which is located on the remote side of the end wall 18A and which is separated from a gas filled cylinder space 62A by a floating piston 25A whereby the resilient bias for the tubular plunger 47A is provided. Parts of the cushioning device shown in Figure 4 which are similar to corresponding parts of the cushioning device shown in Figure 1, are identified by the same reference characters but with the addition of an A.

The tube 17A that forms the cylinder 13A also serves as a major part of the outer casing of the cushioning device. As such it may form part of the coupler body so that it performs a structural role previously provided by separate structure of the coupler. Since it replaces part of the structure of a conventional coupler it leads to a reduction in the overall weight of the coupler and hence in the cost. Further, in the event of a derailment, a railway vehicle to which the coupler is fitted could be lifted back onto the rails by lifting on the body of the cushioning device. Threads, one of which is formed at the outer end of the piston rod 12A and another 33A at the opposite end 21A of the tube 17A are provided for fitting the coupling device to the opposite ends of an end-of-car coupler (not shown).

The bore of the tube 17A is stepped. The cylinder 13A is formed by the smallest diameter portion of the bore which is in the middle. The latter separates an intermediate diameter bore portion, which receives the single ended cylinder 19A, from a larger diameter bore portion which accommodates the ring 48A and the annular end plate 16A. The annular piston 51A that is mounted on the tubular plunger 47A slides within that larger diameter portion of the bore of the tube 17A. The ring 48A abuts the shoulder formed between the smallest and largest diameter portions of that bore.

A hole 71 through the tubular plunger 47A places the cylinder space 58A between the annular end plate 16A and the annular piston 51A in communication with an annular space 72 which is formed between the tubular plunger 47A and the piston rod 12A by a rebated portion of the latter. A radial slot 73, which is formed at the end of the tubular plunger 47A that abuts the piston head 11A, places the annular space 72 in communication with the annular cylinder space 61A when the piston head 11 abuts the tubular plunger 47A as is shown in Figure 4.

The inner end of the piston rod 12A is hollow. It forms a single ended axially extending bore 74. Radial holes 75 communicate with the bore 74 near to the closed end of that bore 74 and place that bore 74 in relatively unrestricted flow communication with the annular space 72. Creep non-return valves 76 are provided in the annular portion of the cylinder rod 12A adjacent to the piston head 11A and allow restricted flow from the annular cylinder space 61A into the closed ended bore 74 under certain operating conditions which are described below.

An annular piston 77 slides within the bore 74. Like the piston head 11 described above with reference to Figure 1, the annular piston 77 is provided with three axially-spaced metallic piston rings, the outer two of which are split rings while the middle one is circumferentially continuous. The annular piston 77 is mounted on the outer one, 78, of a pair of co-axial tubes 78 and 79 which extend through a central aperture 81 in the end plate 18A, the outer tube 78 being fitted into the aperture 81 in a fluid-tight manner. The outer tube 78 functions as a metering pin which interacts with the mouth of the bore 74 to form an annular orifice 82 of flow restricting dimensions. The diameter of the mouth of the bore 74 is reduced compared with the diameter of the remainder of that bore 74 so that an annular chamber 83 is formed around the outer tube 78 between the orifice 82 and the annular piston 77. Radial holes 84 formed in the outer tube 78 near to the annular piston 77 place the annular chamber 83 in communication with the annular space 85 formed between the tubes 78 and 79. The annular piston 77 separates the annular chamber 83 from the remainder 80 of the closed ended bore 74.

Drillings 86 through the piston head 11A and an adjacent part of the annular portion of the piston rod 12A communicate with the bore 74 at a location which is adjacent to the outlets of the creep non-return valves 76. A non-return valve 87 which is mounted in the piston head 11A allows flow through the drillings 86 to the bore 74 from the annular cylinder space 88 that is formed between the piston head 11A and closed end 14A.

The cross-sectional area of the piston head 11A that is exposed to the annular cylinder space 88 is greater than the cross-sectional area of the annular space 61A but is less the sum of the cross-sectional areas of that annular space 61A and the annular cylinder space 58A.

A valve block 89 is provided in the cylinder space 69 and is fitted to the ends of the tubes 78 and 79 that project from the annular end plate 18A. A closed-ended stepped bore 91 is formed centrally in the valve block 89. The outer tube 78 is screwed into the mouth of the stepped bore 91. The inner tube 79 is spigotted into an annular body 92 which is fitted in a fluid-tight manner into an intermediate portion of the closed-ended stepped bore 91. Hence an annular space 93 is formed within the closed-ended stepped bore 91 around an end portion of the inner tube 79 which projects beyond the end of the outer tube 78. The annular space 93 is in communication with the annular space 85 between the two tubes 78 and 79. Further, a chamber 94 is formed by the portion of the bore 91 between the annular body 92 and the closed-end of the bore 91, that chamber 94 being in communication with the bore of the inner tube 79. The annular body 92 seals against flow of hydraulic fluid between the annular space 93 and the chamber 94.

The valve block 89 incorporates two similar pressure relief valves 95 and 96. Each pressure relief valve 95,96 is a multiplier valve which is similar to each of the valves 34A to 34C described above with reference to Figure 1. The valve block 89 is arranged so that the two pressure relief valves 95 and 96 operate independently of one another, one, 95, in response to pressure that is generated by movement of the piston 10A in buff and the other, 96 in response to pressure that is generated by movement of the piston 10A in draft. Each of the pressure relief valves 95 and 96 is operable to inhibit flow of hydraulic fluid through the valve block 89 to the cylinder space 69 via a respective flow path when a force which is less than a predetermined threshold force is applied to displace the piston 10A in the respective direction from the predetermined neutral position shown in Figure 4 and to be opened by pressure in the respective flow path to allow displacement of hydraulic fluid from the cylinder 13A through the valve block 89 to the cylinder space 69 when that predetermined threshold force is exceeded.

As is described in more detail below, the pressure relief valve 95 allows such flow of hydraulic fluid from the annular cylinder space 88 through the annular space 85 and through the valve block 89 when the piston 10A is displaced towards the closed end 14A in buff. On the other hand the pressure relief valve 96 allows such flow of hydraulic fluid from the cylinder spaces 58A and 61A through the bore of the inner tube 79A and the valve block 89 when the cushioning device is extended in draft, the piston head 11A being displaced axially away from the closed end 14A.

The pressure relief valve 95 comprises a differential area piston 97 which has a larger diameter portion and a smaller diameter portion and which slides within a closed-ended stepped bore 98 which is formed in the valve block 89. The closed-ended stepped bore 98 comprises an intermediate diameter bore portion which extends between two larger diameter bore portions and a smallest diameter bore portion which extends from the closed end to the nearer one of the two larger diameter bore portions. The larger diameter portion of the differential area piston 97 slides within the other larger diameter bore portion of the stepped bore 98. The smaller diameter bore portion of the differential area piston 97 slides within the intermediate diameter bore portion of the stepped bore 98. The shoulder 99 formed between the smallest diameter bore portion and the nearer larger diameter bore portion serves as a valve seat on which the smaller diameter end of the differential area piston 97 seats at one end of its stroke so as to block communication between the space 100 formed within the smallest diameter bore portion and the annular space 101 formed by the nearer larger diameter bore portion.

Drillings (not shown) formed in the valve block 89 place the annular space 93 in communication with the space 100 that is formed within the smallest diameter bore portion of the pressure relief valve 95. The space 102 formed within the other large diameter bore portion at the end of the differential area piston 97 remote from the space 100 is in communication with the cylinder space 69.

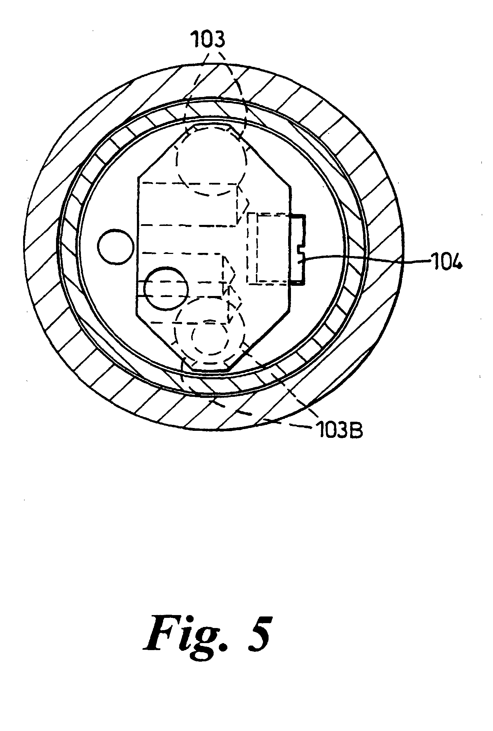

The pressure relief valve 96 is similar to the pressure relief valve 95 and does not need to be described again in detail. Parts of the pressure relief valve 96 that are similar to corresponding parts of the pressure relief valve 95 are identified by the same reference characters with the addition of B. Drillings in the valve block 89 place the chamber 94 at the inner end of the central closed-ended stepped bore 91 in communication with the space 100B that is formed within the smallest diameter bore portion of the closed-ended stepped bore 98B of the pressure relief valve 96. Figure 5 shows the location of holes 103 and 103B by which the annular space 101, 101B of each pressure relief valve 95, 96 is placed in communication with the cylinder space 69. A non-return valve 104 which is mounted in the valve block 89 allows flow of hydraulic fluid from the cylinder space 69 into the chamber 94. A non-return valve 105 in the end plate 18A allows flow of hydraulic fluid from the cylinder space 69 into the annular cylinder space 88, such flow by-passing the valve block 89 to access the inlet of the non-return valve 105.

When the cushioning device is in buff, that is to say when external forces are applied to compress the device so as to shorten its length, the initial relative positions of the elements of the cushioning device are as shown in Figure 4, the piston 10A being in its predetermined neutral position. The applied external forces increase the pressure of the hydraulic fluid in the annular cylinder space 88 between the piston head 11A and the closed-end 14A of the cylinder 13A. That annular cylinder space 88 is in communication through the orifice 82, the annular chamber 83, the radial holes 84, the annular space 85 between the tubes 78 and 79 and the annular space 93 with the space 100 at the closed-end of the stepped bore 98 of the pressure relief valve 95. Hence the pressure in the space 100 increases with the increasing pressure of the hydraulic fluid in the annular space 88 but the differential area piston 97 remains seated until a predetermined threshold pressure is reached. When that predetermined threshold pressure is reached, the differential area piston 97 is displaced away from the closed end of the closed ended stepped bore 98 of the pressure relief valve 95 thereby placing the space 100 in communication with the annular space 101 so that hydraulic fluid is displaced from the annular space 88 and flows through the path comprising the orifice 82, the annular chamber 83, the radial holes 84, the annular spaces 85 and 93 and the space 100 to the annular space 101 and from there through the holes 103 into the cylinder space 69. That fluid flow through the orifice 82, which is precisely formed, dissipates energy dependent upon the velocity of relevant movement between the piston 10A and the outer tube 78. Further energy is absorbed by the operation of the pressure relief valve 95 as is well known. Some of the hydraulic fluid that is so displaced from the annular cylinder space 88 through the pressure relief valve 95 and into the cylinder space 69 enters the chamber 94 through the non-return valve 104. That fluid flows through the bore of the inner tube 79 into the closed-ended bore 74 formed in the piston rod 12A. Such fluid entering the bore 74 passes from it through the radial holes 75 into the surrounding annular space 72 from where it flows through the radial slots 73, into the annular cylinder space 61A. Initially the outlets of the creep non-return valves 76 are blocked by the circumferentially continuous middle piston ring of the annular piston 77 as is shown in Figure 4. Should the annular piston 77 be displaced sufficiently to uncover the outlets of the creep non-return valves 76 during compression of the device, the amount of fluid leakage from the annular space 72 through them will be negligible compared with the flow into the annular cylinder space 61A. Further such small flow will be into the annular space 83 where it will join the main flow displaced from the annular cylinder space 88. Hence the annular cylinder space 83 is kept full of oil whilst its length is increased. Since the annular cylinder space 88 has a larger cross-sectional area than does the annular cylinder space 61A, not all the hydraulic fluid that is displaced from it in buff is transferred to the annular cylinder space 61A as has just been described. Consequently the volume of hydraulic fluid in the cylinder space 69 increases so that the floating piston 25A is displaced away from the valve block 89 thus further compressing gas in the cylinder space 62A and thereby providing a recoil force which acts as is described below when the application of external force to compress the cushioning device stops.

When the cushioning device is extended in its length by an application of appropriate external forces,that is to say when the cushioning device is in draft, assuming that its elements are initially in the relative positions shown in Figure 4 in which the piston 10A is in the predetermined neutral position, the pressure of the hydraulic fluid in the cylinder space 61A is increased by the forces that urge the piston head 11A towards the static ring 48A and the pressure of the hydraulic fluid in the cylinder space 58A is also increased by action of those forces acting through the tubular plunger 47 and the annular piston 51A that is carried by it. Such increase in fluid pressure is transmitted from the annular cylinder spaces 61A and 58A through the radial slots 73 and the holes 71 respectively into the annular space 72 that is formed between the tubular plunger 47A and the piston rod 12A. Such increase in fluid pressure in the annular space 72 is transmitted therefrom through the radial holes 75 into the closed-ended bore 74 formed within the piston rod 12A. From there it is transmitted through the bore of the inner tube 79 to the chamber 94 in the valve block 89 from where it is transmitted to the space 100B of the pressure relief valve 96. The operation of the pressure relief valve 96 is the same as has been described for the pressure relief valve 95. Hence, when a certain threshold pressure is reached, the differential area piston 97B of the pressure relief valve 96 is unseated and hydraulic fluid is displaced from the cylinder spaces 58A and 61A along the path comprising the radial holes 71 or slots 73, the annular space 72, the radial holes 75, the closed ended bore 74, the bore of the inner tube 79 and the chamber 94 to the space 100B from where it flows through the annular space 101B and the holes 103B into the cylinder space 69.

The increasing volume of the annular cylinder space 88 is kept filled with hydraulic fluid by a flow of hydraulic fluid from the cylinder space 69 through the non-return valve 105 provided in the end plate 18A.

There is a pressure drop as hydraulic fluid that is displaced from the cylinder spaces 58A and 61A flows out of those cylinder spaces through the respective radial holes 71 and radial slots 73. These pressure drops together with the well known action of the pressure relief valve 96 result in absorbtion of energy whilst the cushioning device operates in draft.

Again, since the sum of the cross-sectional areas of the cylinder spaces 58A and 61A exceeds the cross-sectional area of the cylinder space 88, more hydraulic fluid is displaced from the cylinder spaces 58A and 61A than is returned to the cylinder space 88 through the pressure relief valve 105. The surplus displaced hydraulic fluid causes an increase in the volume of the hydraulic fluid in the cylinder space 69 which causes displacement of the floating piston 25A to increase the pressure of the compressed gas in the cylinder space 62A.

As stated above, during both buff and draw the floating piston 25A is displaced away from the valve block 89 and the compressed gas in the cylinder space 62A is further compressed to provide a recoil force.

Following a buff operation, since the cross-sectional area of the annular cylinder space 88 is greater than the cross-sectional area of the annular cylinder space 61A on the other side of the piston head 11A, the piston 10A will be urged away from the closed end 14A by the differential fluid pressure loading on it. That will move the piston 10A towards the predetermined neutral position when the external forces that compressed the cushioning device cease to act. As a result the volume of the annular cylinder space 88 will be increased progressively.
Consequently fluid will be displaced from the cylinder space 69 by displacement of the floating piston 25A towards the valve block 89 due to expansion of the compressed gas in the cylinder space 62A, that displaced fluid passing through the non-return valve 105 in the annular end plate 18A into the annular cylinder space 88. Likewise the volume of the annular cylinder space 61A will be reduced progressively. Fluid will be displaced from the annular cylinder space 61A through the radial holes 75 into the closed-ended bore 74. From there it will flow through the bore of the inner tube 79 to the chamber 94 in the valve block 89 from where it will be transmitted to the space 100B of the pressure relief valve 96. The piston 97B of the pressure relief valve 96 will be unseated so that the hydraulic fluid will flow through that pressure relief valve 96 into the cylinder space 69 and from there, through the non-return valve 105 in the annular end plate, into the annular cylinder space 88. For most of the return stroke of the piston 10A, fluid will also be displaced from the annular cylinder space 61A through the creep non-return valves 76 until the outlets of the creep non-return valves 76 are closed by the circumferentially continuous middle piston ring of the annular piston 77 carried by the outer tube 78. The fluid displaced from the annular cylinder space 61A through the annular space 72, the creep non-return valves 76 into the annular chamber 83 will be returned to the annular cylinder space 88 through the orifice 82. The flow of hydraulic fluid from the annular cylinder space 61A through the creep non-return valves 76 and the restricted orifice 82 into the annular cylinder space 88 bypasses the multiplier pressure relief valve 96 and is restricted by its flow through the creep non-return valves 76 and the restricted orifice 82.

This will continue until the piston head 11A abuts the tubular plunger 47A where it will stop because the sum of the cross-sectional areas of the annular cylinder spaces 61A and 58A is greater than the cross-sectional area of the annular cylinder space 88 so the fluid pressure loading on the piston will not continue to urge it to further increase the volume of the annular cylinder space 88. At this point pressure throughout the cushioning unit will be uniform.

The restricted flow from the annular cylinder space 61A through the creep non-return valves 76 and the restricted orifice 82 will be cut off by the annular piston 77 as the piston head 11A approaches the neutral position in which it is held at rest by the tubular plunger 47A. By this arrangement, the velocity of the piston 10A is reduced as it approaches the predetermined neutral position at which the piston 10A comes to rest. This velocity reduction is due to restriction of flow of hydraulic fluid from the creep non-return valves 76 into the annular chamber 83. Such flow is restricted initially by the first part of annular piston 77 that traverses the outlets of the creep non-return valves 76 and then, as the first of the split piston rings traverses the outlets of the creep non-return valves 76 and until those outlets are blocked by the middle piston ring, such flow is restricted by the first split piston ring.

Likewise when the force causing extension in draft ceases, the recoil force will act to displace the floating piston 25A towards the valve block 89 which in turn will displace fluid from the cylinder space 69 through the non-return valve 104 into the chamber 94, from where it will flow through the bore of the inner tube 79 to the closed-ended bore 74 in the piston rod 12A. Such fluid will flow through the bore 74, exiting through the radial holes 75 into the annular space 72 and from there through the holes 71 into the annular cylinder space 58A and through the radial slots 73 into the annular cylinder space 61A. The introduction of such hydraulic fluid into the annular cylinder spaces 58A and 61A will urge the piston 51A towards the static ring 48A and the resultant thrust applied to the tubular plunger 47A in combination with the action of the introduction of fluid pressure into the cylinder chamber 61A will urge the piston head 11A towards the predetermined neutral position. The fluid displaced from the annular cylinder space 88 due to its reducing volume, will flow through the non-return valve 87 in the piston head 11A and through the drillings 86 into the closed end bore 74 where it is added to the liquid entering the bore 74 from the bore of the inner tube 79. This flow of fluid displaced from the annular cylinder space 88 through the non-return valve 87 into the closed ended bore 74 will be cut off by the annular piston 77 as the piston head 11A approaches the neutral position so that the velocity of the piston 10A is reduced as it approaches the predetermined neutral position at which the piston 10A comes to rest. This velocity reduction is due to the action of the annular piston 77 and its piston rings which is substantially the same as has been described above for the final part of the return movement of the piston 10A to the predetermined neutral position after a buff operation.

The movement of the annular piston 51A and the tubular plunger 47A towards to the closed-end 14A of the cylinder 13A with movement of the piston 10A towards the predetermined neutral position following operation in draft, causes displacement of air in the space between the piston 51A and the static ring 48A radially outwardly with respect to the annular stop ring 53A. That air is vented from that space around the stop ring 53A and to atmosphere through a respective hole in the tube 17A. A vibration pin is provided in that hole in order to reduce the risk of it becoming clogged.

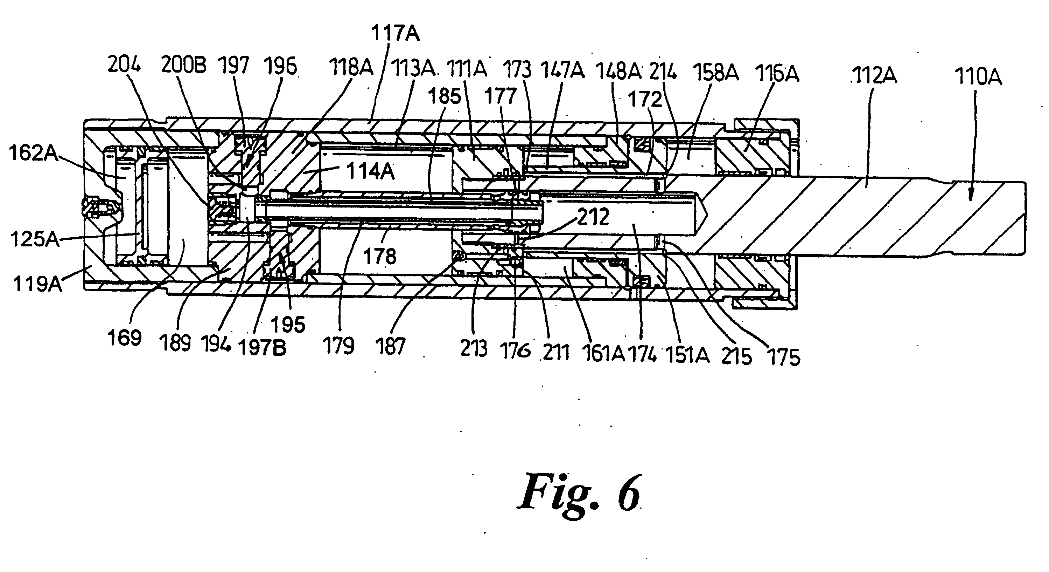

Figure 6 shows a modified form of the hydro-pneumatic cushioning device shown in Figures 4 and 5. Parts of the cushioning device shown in Figure 6 which are similar to corresponding parts of the cushioning device shown in Figures 4 and 5 are identified by the same reference characters but with the addition of 100.

The resiliently biassed tubular plunger 147A that slides within the static ring 148A and that slides on the piston rod 112A, that being the plunger that locates the piston 110A in a predetermined neutral position, does not extend through the annular end plate 116A with the piston rod 112A. Hence there are no holes, corresponding to the holes 71, in the tubular plunger 147A to place the cylinder space 158A that is formed between the annular end plate 116A and the annular piston 151A which is carried by the tubular plunger 147A in communication with the radial holes 175 that communicate with the closed ended bore 174 in the piston rod 112A. Those radial holes 175 will be uncovered by the tubular plunger 147A when such communication should be established. Moreover the tubular plunger 147A and the annular piston 151A are formed as one piece.

The valve block 189 and the end plate 118A at the closed end of the cylinder 113A are formed in one piece. Also the axis of the two multiplier valves 195 and 196 in the valve block 189 are radial with respect to the axis of the cushioning device rather than parallel to that axis as in the cushioning device shown in Figure 4. This allows simplification of the arrangement of passages in the valve block 189 as compared to those of the valve block 89 of the cushioning device shown in Figure 4. The bore of the inner tube 179 communicates with the space 200B at the smaller diameter end of the stepped plunger 197 of the multiplier pressure relief valve 196 through the chamber 194.

The inlet of each creep valve 176 is formed in the piston head 111A at a location in the face 211 that bounds the annular cylinder space 161A, that location being disposed radially outwardly with respect to the location on that face 211 that is abutted by the slotted end 173 of the tubular plunger 147A. Conduits in the piston head 111A and in the piston rod 112A place the outlets of both the non-return valve 187 and the creep valves 176 in communication with a port 212 which is formed in the cylindrical surface of the closed-ended bore 174. The conduits include a scroll 213 which forms a helical passage at the cylindrical interface between the piston head 111A and the piston rod 112A.

The operation of the cushioning device shown in Figure 6 is the same as that of the cushioning device shown in Figures 4 and 5 which has been described above, except that communication between the annular cylinder space 158A and the closed-ended bore 174 through the radial passages 175 is through an annular gap 214 that is formed between the mouth 215 of the integral tubular plunger 147 and annular piston 151A at the end thereof that is nearer to the annular end plate 116A on the one hand and the radially outer edge of the larger diameter portion of the piston rod 112A at the step between that larger diameter piston rod portion and the rebated portion of that piston rod 112A which forms the annular space 172.

The non-return valve 204 is formed in the valve block 189 co-axially with the inner tube 179 adjacent the end of that inner tube 179. The non-return valve 204 allows flow of hydraulic fluid from the cylinder space 169 into the chamber 194.

Various modifications of any of the cushioning devices described above with reference to the drawings may be made without departing from the scope of protection claimed by the claims. One such possible modification involves the use of an additional multiplier valve and non-return valve to control discharge of hydraulic fluid from the two annular cylinder spaces 58 and 58A, 158A and 61, 61A and 161A formed on either side of the static ring 48, 48A, 148A and the annular piston 51, 51A, 151A. This leads to an increase of the force required to extend the cushioning device in draft which is known as the draft capacity of the cushioning device.

## Claims

1. A hydro-pneumatic cushioning device for use in an energy absorbing device such as an end of car coupler for a railway vehicle, the cushioning device comprising structure forming a cylinder chamber (13; 13A; 113A) which has two ends, one of which is closed (14; 14A; 114A), and which is filler with hydraulic fluid when the device is in use, a hydraulic fluid reservoir, metering means which provide metered communication between the cylinder chamber (13; 13A; 113A) and the reservoir, a piston (10; 10A; 110A) comprising a piston head (11; 11A; 111A) which is slidable within the bore of the cylinder chamber and a piston rod (12; 12A; 112A) which is slidable within a structure (48; 48A; 148A) which forms the other end of the cylinder chamber, the arrangement being such that movement of the piston (10; 10A; 110A) away from a location within the cylinder chamber (13; 13A; 113A) which the piston (10; 10A; 110A) adopts when the device is not loaded displaces hydraulic fluid from the cylinder chamber (13; 13A; 113A) to the reservoir through said metering means, there being a space (62; 62A; 162A) which is filled with gas when the device is in use and which is arranged so that the gas acts through the hydraulic fluid to urge the piston (10; 10A; 110A) towards said location when the device is not loaded, **characterised in that** the device includes one-way valve means operable to allow flow of hydraulic fluid from the reservoir to the cylinder chamber (13; 13A; 113A) and **in that** resiliently-biassed abutment means are provided within the cylinder chamber (13; 13A; 113A) between the piston head (11; 11A; 111A) and the structure (48; 48A; 148A) that forms said other end of the cylinder chamber (13; 13A; 113A), the abutment means being operable to be abutted by the piston head (11; 11A; 111A) as it moves towards said other end whereby to establish said location as a predetermined neutral position of the piston head (11; 11A; 111A) spaced from the structure (48; 48A; 148A) that forms said other end of the cylinder chamber (13; 13A; 113A), and to be displaced against the resilient bias by movement of the piston head (11; 11A; 111A) in the draft direction whereby the device can absorb energy in the draft direction.

2. A hydro-pneumatic cushioning device according to claim 1 including means operable to reduce the velocity of the piston (10; 10A; 110A) as it approaches the predetermined neutral position.

3. A hydro-pneumatic cushioning device according to claim 2, wherein the means operable to reduce the velocity of the piston (10; 10A; 110A) comprise conduit means formed by said structure so as to communicate with said cylinder chamber (13; 13A; 113A) and means operable to restrict communication between said conduit means and said cylinder chamber (13; 13A; 113A) as said piston (10; 10A; 110A) approaches the predetermined neutral position, such communication being substantially unrestricted when the piston (10; 10A; 110A) is displaced substantially from said predetermined neutral position.

4. A hydro-pneumatic cushioning device according to claims 1 to 3 wherein the abutment means comprise a floating plunger (47; 47A; 147A) which is slidable in a cavity formed in the structure (48; 48A; 148A) that forms said other end and which is urged towards said piston head (11; 11A; 111A) by said resilient bias.

5. A hydro-pneumatic cushioning device according to claim 4, wherein the floating plunger (47; 47A; 147A) is tubular and the cavity is annular.

6. A hydro-pneumatic cushioning device according to claim 5, wherein the tubular floating plunger (47; 47A; 147A) is slidable on the piston rod (12; 12A; 112A).

7. A hydro-pneumatic cushioning device according to claim 5 or claim 6, wherein the tubular plunger (47; 47A; 147A) carries an annular piston (51; 51A; 151A) which slides within a further cylinder space (58; 58A; 158A) which comprises part of said cavity and which is isolated from said cylinder chamber (13; 13A; 113A) by the structure (48; 48A; 148A) that forms said other end.

8. A hydro-pneumatic cushioning device according to any one of claims 1 to 7, wherein an at least partly displaceable wall is provided as a boundary of said space (62; 62A; 162A) whereby said space (62; 62A; 162A) is separated from hydraulic fluid in the reservoir.

9. A hydro-pneumatic cushioning device according to claim 8, wherein said space (62; 62A; 162A) is another cylinder chamber (19; 19A; 119A) which is formed in the closed end (14; 14A; 114A) of the first mentioned cylinder chamber (13; 13A; 113A) and said at least partly displaceable wall comprises a floating piston (25; 25A; 125A) which is slidable within that other cylinder chamber (19; 19A; 119A).

10. A hydro-pneumatic cushioning device according to either of claims 8 and 9 when appended to claim 7, wherein conduit means are provided whereby said further cylinder space (58; 58A; 158A) on the side of said annular piston (51; 51A; 151A) remote from said cylinder chamber (13; 13A; 113A) is in communication with the side of said at least partly displaceable wall remote from said space (62; 62A; 162A).

11. A hydro-pneumatic cushioning device according to any one of claims 8 to 10, wherein the reservoir is an annular chamber (29) which coaxially surrounds said cylinder chamber (13) and said metering means comprise metering holes in the cylindrical wall of the cylinder chamber (13) which are spaced from one another in a direction which is parallel to the axis of the cylinder chamber (13), conduit means (24) being formed in the structure (17) that forms the closed end (14) of the cylinder chamber (15), whereby the annular chamber (29) communicates with the side of said at least partly displaceable wall remote from said space (62).

12. A hydro-pneumatic cushioning device according to claim 11 when appended to claim 3 wherein said conduit means (59) which communicate with said cylinder space (13) place the cylinder space (13) and the coaxially surrounding annular chamber (29) in communication when the piston (10) is displaced substantially from the predetermined neutral position.

13. A hydro-pneumatic cushioning device according to claim 11 or claim 12, wherein a valve (34A, 34B, 34C) is fitted into each metering hole, each valve (34A, 34B, 34C) being operable to inhibit passage of hydraulic fluid through the respective metering hole when a force which is less than a predetermined threshold force is applied to urge the piston (10) axially within the cylinder chamber (13) and to open to allow displacement of hydraulic fluid between the cylinder chamber (13) and the reservoir when a force which is greater than the predetermined threshold force is applied to urge the piston (10) into the cylinder chamber (13).

14. A hydro-pneumatic cushioning device according to any one of claims 8 to 10, wherein part of the reservoir is formed between said cylinder chamber (13A; 113A) and said space (62A; 162A) from which it is separated by said at least partly displaceable wall, and the metering means comprises at least one valve (95, 96; 195, 196) which is operable to inhibit passage of hydraulic fluid through a respective orifice when a force which is less than a predetermined threshold force is applied to urge the piston (10A; 110A) axially within the cylinder chamber (13A; 113A) and to open to allow displacement of hydraulic fluid between the cylinder chamber (13A; 113A) and the reservoir through said orifice when a force which is greater than the predetermined threshold force is applied to urge the piston (10A; 110A) into the cylinder chamber (13A; 113A), the orifice being formed in structure (89; 189) which separates the reservoir from said cylinder chamber (13A; 113A).

15. A hydro-pneumatic cushioning device according to claim 13 or claim 14, wherein the or each valve (95, 96; 195, 196) comprises an obturating member which is a differential area piston (97, 97B; 197, 197B), the larger surface area of which is exposed to the interior of the reservoir and the smaller diameter end portion of which is adapted to seat on the perimeter of the respective hole or orifice when the valve closes that hole or orifice.

16. A hydro-pneumatic cushioning device according to claim 14, or claim 15, wherein the metering means further comprises a metering pin which is mounted in the structure (89; 189) that separates the reservoir from said cylinder chamber (13A; 113A) and which projects coaxially into a closed ended cylindrical chamber (74; 174) formed in the piston (10A; 110A), the metering pin cooperating with the mouth of the closed ended cylindrical chamber (74; 174) to provide a velocity dependent control of flow of fluid into the closed ended cylindrical chamber (74; 174).

17. A hydro-pneumatic cushioning device according to claim 16, wherein the metering pin comprises the outer (78; 178) of two tubes, the inner tube (79; 179) extending within the outer (78; 178), the annular space (85; 185) between the two tubes being in communication with the reservoir through one said valve (95; 195) whereby to provide a flow path for a metered flow of fluid displaced from said cylinder chamber (13A; 113A) when the device is operated in buff and the bore of the inner tube (79; 179) being in communication with the reservoir via another said valve (96; 196) whereby, together with orifices of flow controlling dimensions which control flow into said closed ended cylindrical chamber (74; 174) from cylinder spaces (58A, 61A; 158A, 161A) on the opposite side of the piston head (11A; 111A) of said piston (10A; 110A) from said cylinder chamber (13A; 113A) to provide a flow path for a metered flow of fluid displaced from said cylinder spaces (58A, 61A; 158A, 161A) on the opposite side of the piston head (11A; 111A) to the reservoir when the device is operated in draft, one-way valve means being provided to allow flow from the reservoir to the respective cylinder spaces (13A, 58A, 61A; 113A, 158A, 161A) on either side of the piston head (11A; 111A).

18. A hydro-pneumatic cushioning device according to claim 17 when appended to claim 3, wherein said conduit means formed by said structure so as to communicate with said cylinder chamber (13A; 113A) provides a restricted flow path between the annular cylinder space (61A; 161A) on the opposite side of said piston head (11A; 111A) and said cylinder chamber (13A; 113A) which by passes said valves (96; 196) when it is open.

19. A hydro-pneumatic cushioning device according to claim 18 wherein said conduit means formed by said structure so as to communicate with said cylinder chamber (13A; 113A) place said closed ended cylindrical chamber (13A; 113A) in restricted communication with the annular cylinder space (61A; 161A) on the opposite side of said piston head (11A; 111A) from said cylinder chamber (13A; 113A).

20. A hydro-pneumatic cushioning device according to claim 19, wherein said conduit means formed by said structure so as to communicate with said cylinder chamber (13A; 113A) are closed by piston means (77; 177) carried by said metering pin and slidable in said closed ended cylinder chamber (74; 174A).

## Patentansprüche

1. Hydropneumatische Puffervorrichtung zur Verwendung in einer energieabsorbierenden Vorrichtung, wie z.B. einer am Ende des Wagens angebrachten Kupplung für ein Eisenbahnfahrzeug, wobei die Puffervorrichtung folgende Bestandteile umfasst: eine Struktur, die eine Zylinderkammer (13; 13A; 113A) bildet, die zwei Enden aufweist, von denen das eine (14; 14A; 114A) geschlossen ist, und die mit einer hydraulischen Flüssigkeit gefüllt ist, wenn sich die Vorrichtung im Betrieb befindet, einen Vorratsbehälter für die hydraulische Flüssigkeit, Dosiereinrichtungen, die eine dosierte Verbindung zwischen der Zylinderkammer (13; 13A; 113A) und dem Vorratsbehälter schaffen, einen Kolben (10; 10A; 110A), dereinen Kolbenkopf (11; 11A; 111A) aufweist, der in der Bohrung der Zylinderkammer verschiebbar ist, und eine Kolbenstange (12; 12A; 112A), die in einer Struktur (48; 48A; 148A) verschiebbar ist, die das andere Ende der Zylinderkammer bildet, wobei die Anordnung so getroffen ist, daß eine Bewegung des Kolbens (10; 10A; 110A) von einer Stelle in der Zylinderkammer (13; 13A; 113A) weg, die der Kolben (10; 10A; 110A) einnimmt, wenn die Vorrichtung nicht unter Last steht, hydraulische Flüssigkeit aus der Zylinderkammer (13; 13A; 113A) zum Vorratsbehälter durch die Dosiereinrichtungen verdrängt, wobei ein Hohlraum (62; 62A; 162A) vorhanden ist, der mit Gas gefüllt ist, wenn sich die Vorrichtung im Betrieb befindet, und der so ausgebildet ist, daß das Gas durch das hydraulische Fluid so wirkt, daß es den Kolben (10; 10A; 110A) zu besagter Stelle hin drückt, wenn die Vorrichtung nicht unter Last steht, **dadurch gekennzeichnet, daß** die Vorrichtung eine Einweg-Ventilvorrichtung umfasst, die so betreibbar ist, daß sie ein Strömen des hydraulischen Fluids vom Vorratsbehälter zur Zylinderkammer (13; 13A; 113A) ermöglicht, und daß elastisch vorgespannte Anschtagseinrichtungen in der Zylinderkammer (13; 13A; 113A) zwischen den Kolbenkopf (11; 11A; 111A) und der Struktur (48; 48A; 148A) vorgesehen sind, die das andere Ende der Zylinderkammer (13; 13A; 113A) bildet, wobei die Anschlagseinrichtungen so betätigbar sind, daß an sie der Zylinderkopf (11; 11A; 111A) anschlägt, wenn er sich zu dem anderen Ende hin bewegt, wodurch besagte Stelle als eine vorbestimmte neutrale Position des Kolbenkopfes (11; 11A; 111A) definiert wird, die von der Struktur (48; 48A; 148A) im Abstand angeordnet ist, die das andere Ende der Zylinderkammer (13; 13A; 113A) bildet, und daß sie gegen die elastische Vorspannung durch die Bewegung des Kolbenkopfes (11; 11A; 111A) in der Zugrichtung verschoben wird, wodurch die Vorrichtung Energie in der Zugrichtung absorbieren kann.

2. Hydropneumatische Puffervorrichtung nach Anspruch 1, die Mittel umfasst, die betreibbar sind, um die Geschwindigkeit des Kolbens (10; 10A; 110A) zu vermindern, wenn er sich der vorbestimmten neutralen Position nähert.

3. Hydropneumatische Puffervorrichtung nach Anspruch 2, bei der die Mittel, die betreibbar sind, um die Geschwindigkeit des Kolbens (10; 10A; 110A) zu vermindern, Leitungseinrichtungen umfassen, die von der besagten Struktur gebildet werden, um mit der Zylinderkammer (13; 13A; 113A) in Verbindung zu stehen sowie Mittel, die betreibbar sind, um die Verbindung zwischen diesen Leitungseinrichtungen und der Zylinderkammer (13; 13A; 113A) zu vermindem, wenn sich der Kolben (10; 10A; 110A) der vorbestimmten neutralen Position nähert, wobei diese Verbindung im wesentlichen uneingeschränkt ist, wenn der Kolben (10; 10A; 110A) beträchtlich gegen die vorbestimmte neutrale Position verschoben ist.

4. Hydropneumatische Puffervorrichtung nach den Ansprüchen 1 bis 3, bei der die Anschlagsmittel einen schwimmenden Tauchkolben (47; 47A; 147A) umfassen, der in einem in der Struktur (48; 48A; 148A), die das andere Ende bildet, ausgebildeten Hohlraum verschiebbar ist und der durch die elastische Vorspannung zum Kolbenkopf (11; 11A; 111A) hin gedrückt wird.

5. Hydropneumatische Puffervorrichtung nach Anspruch 4, bei der der schwimmende Tauchkolben (47; 47A; 147A) rohrförmig und der Hohlraum ringförmig ausgebildet ist.

6. Hydropneumatische Puffervorrichtung nach Anspruch 5, bei der der rohrförmige schwimmende Tauchkolben (47; 47A; 147A) auf der Kolbenstange (12; 12A; 112A) verschiebbar ist.

7. Hydropneumatische Puffervorrichtung nach Anspruch 5 oder 6, bei der der rohrförmige Tauchkolben (47; 47A; 147A) einen ringförmigen Kolben (51; 51A; 151A) trägt, der in einem weiteren Zylinderraum (58; 58A; 158A) gleitet, der einen Teil des Hohlraumes umfasst und von der Zylinderkammer (13; 13A; 113A) durch die Struktur (48; 48A; 148A) getrennt ist, die das andere Ende bildet.

8. Hydropneumatische Puffervorrichtung nach einem der Ansprüche 1 bis 7, bei der eine zumindest teilweise verschiebbare Wand als Begrenzung des Raumes (62; 62A; 162A) vorgesehen ist, wodurch dieser Raum (62; 62A; 162A) von dem hydraulischen Fluid in dem Vorratsbehälter getrennt ist.

9. Hydropneumatische Puffervorrichtung nach Anspruch 8, bei der der Raum (62; 62A; 162A) eine weitere Zylinderkammer (19; 19A; 119A) ist, die in dem geschlossenen Ende (14; 14A; 114A) der ersten Zylinderkammer {13; 13A; 113A) ausgebildet ist, und bei der die zumindest teilweise verschiebbare Wand einen schwimmenden Kolben (25; 25A; 125A) umfasst, der in der anderen Zylinderkammer (19; 19A; 119A) verschiebbar ist.

10. Hydropneumatische Puffervorrichtung nach Anspruch 8 oder 9 in Abhängigkeit von Anspruch 7, bei der Leitungseinrichtungen vorgesehen sind, durch die der weitere Zytinderraum (58; 58A; 158A) auf der Seite des ringförmigen Kolbens (51; 51A; 151A), die von der Zylinderkammer (13; 13A; 113A) entfernt liegt, mit der Seite der zumindest teilweise verschiebbaren Wand in Verbindung steht, die vom Raum (62; 62A; 162A) entfernt liegt.

11. Hydropneumatische Puffervorrichtung nach einem der Ansprüche 8 bis 10, bei der der Vorratsbehälter eine ringförmige Kammer (29) ist, die die Zylinderkammer (13) koaxial umgibt, und bei der die Dosiereinrichtung Dosieröffnungen in der zylindrischen Wand der Zylinderkammer (13) umfasst, die voneinander im Abstand in einer Richtung angeordnet sind, die parallel zur Achse der Zylinderkammer (13) verläuft, wobei Leitungseinrichtungen (24) in der Struktur (17), die das geschlossene Ende (14) der Zylinderkammer (13) bildet, ausgebildet sind, wodurch die ringförmige Kammer (29) mit der Seite der wenigstens teilweise verschiebbaren Wand in Verbindung steht, die von dem Raum (67) entfernt liegt.

12. Hydropneumatische Puffervorrichtung nach Anspruch 11, wenn dieser auf Anspruch 3 bezogen ist, bei der die Leitungseinrichtungen (59), die mit dem Zylinderraum (13) in Verbindung stehen, den Zylinderraum (13) und die koaxial umgebende ringförmige Kammer (29) miteinander in Verbindung bringen, wenn der Kolben (10) beträchtlich aus der vorbestimmten neutralen Stellung heraus verschoben ist.

13. Hydropneumatische Puffervorrichtung nach Anspruch 11 oder 12, bei der ein Ventil (34A; 34B; 34C) in jede Dosieröffnung eingesetzt ist, wobei jedes Ventil (34A; 348; 34C) betätigbar ist, um das Hindurchtreten von hydraulischem Fluid durch die betreffende Dosieröffnung zu hemmen, wenn eine Kraft, die kleiner ist als eine vorbestimmte Schwellenkraft, angelegt wird, um den Kolben (10) in der Zylinderkammer (13) in axialer Richtung zu drücken, und sich zu öffnen, um eine Verschiebung von hydraulischem Fluid zwischen der Zylinderkammer (13) und dem Vorratsbehälter zu ermöglichen, wenn eine Kraft, die größer ist als die vorbestimmte Schwellenkraft, angelegt wird, um den Kolben (10) in die Zylinderkammer (13) zu drücken.

14. Hydropneumatische Puffervorrichtung nach einem der Ansprüche 8 bis 10, bei der ein Teil des Vorratsbehälters zwischen der Zylinderkammer (13A; 113A) und dem Raum (62A; 162A) ausgebildet ist, von dem er durch die wenigstens teilweise verschiebbare Wand getrennt ist, und bei der die Dosiereinrichtungen wenigstens ein Ventil (95, 96; 195, 196) umfassen, das betätigbar ist, um das Hindurchtreten von hydraulischem Fluid durch eine entsprechende Öffnung zu verhindern, wenn eine Kraft, die kleiner ist als eine vorbestimmte Schwellenkraft, angelegt wird, um den Kolben (10A; 110A) in axialer Richtung in der Zylinderkammer (13A; 113A) zu drücken, und sich zu öffnen, um eine Verschiebung von hydraulischem Fluid zwischen der Zylinderkammer (13A; 113A) und dem Vorratsbehälter durch diese Öffnung hindurch zu ermöglichen, wenn eine Kraft, die größer ist als die vorbestimmte Schwellenkraft, angelegt wird, um den Kolben (10A; 110A) in die Zylinderkammer (13A; 113A) zu drücken, wobei die Öffnung in der Struktur (89; 189) ausgebildet ist, die den Vorratsbehälter von der Zylinderkammer (13A; 113A) trennt.

15. Hydropneumatische Puffervorrichtung nach Anspruch 13 oder 14, bei der das oder jedes Ventil (95, 96; 195, 196) ein Verschlußelement umfasst, das ein Differentialflächenkolben (97, 97B; 197, 197B) ist, dessen größerer Oberflächenbereich dem Inneren des Behälters ausgesetzt ist und dessen Endteil mit kleinerem Durchmesser so ausgebildet ist, daß er auf dem Umfang des betreffenden Lochs oder der betreffenden Öffnung aufsitzt, wenn das Ventil dieses Loch oder diese Öffnung verschließt.

16. Hydropneumatische Puffervorrichtung nach Anspruch 14 oder 15, bei der die Dosiermittel weiterhin einen Dosierstift umfassen, der in der Struktur (89; 189) montiert ist, die den Vorratsbehälter von der Zylinderkammer (13A; 113A) trennt, und der koaxial in eine zylindrische Kammer (74; 174) mit geschlossenem Ende vorsteht, die in dem Kolben (10A; 110A) ausgebildet ist, wobei der Dosierstift mit der Mündung der zylindrischen Kammer (74; 174) mit geschlossenem Ende zusammenwirkt, um eine geschwindigkeitsabhängige Steuerung der Strömung des Fluids in die zylindrische Kammer (74; 174) mit geschlossenem Ende vorzusehen.

17. Hydropneumatische Puffervorrichtung nach Anspruch 16, bei der der Dosierstift das äußere (78; 178) von zwei Rohren umfasst, wobei das innere Rohr (79; 179) sich innerhalb des äußeren Rohres (78; 178) erstreckt und der ringförmige Raum (85; 185) zwischen den beiden Rohren mit dem Vorratsbehälter über das eine Ventil (95; 195) in Verbindung steht, um dadurch einen Strömungspfad für eine dosierte Strömung von Fluid zu schaffen, das aus der Zylinderkammer (13A; 113A) verdrängt wird, wenn die Vorrichtung im Pufferbetrieb arbeitet, und bei der die Bohrung des inneren Rohres (79; 179) mit dem Vorratsbehälter über das andere Ventil (96; 196) in Verbindung steht, wobei zusammen mit Öffnungen mit strömungssteuemden Abmessungen, die die Strömung in die zylindrische Kammer (74; 174) mit geschlossenem Ende aus den Zylinderräumen (58A, 61A; 158A, 161A) auf der der besagten Zylinderkammer (13A; 113A) gegenüberliegenden Seite des Kolbenkopfes (11A; 111A) des Kolbens (10A; 110A) steuern, um einen Strömungsweg für eine dosierte Stömung von Fluid zu schaffen, das aus den Zylinderräumen (58A, 61A; 158A, 161A) auf der dem Vorratsbehälter gegenüberliegenden Seite des Kolbenkopfes (11A; 111A) verdrängt wird, wenn die Vorrichtung im Zugbetrieb arbeitet, wobei Einweg-Ventileinrichtungen vorgesehen sind, um eine Strömung aus dem Vorratsbehälter zu den jeweiligen Zylinderräumen (13A, 58A, 61A; 113A, 158A, 161A) auf beiden Seiten des Kolbenkopfes (11A; 11A) zu ermöglichen.

18. Hydropneumatische Puffervorrichtung nach Anspruch 17, wenn dieser auf Anspruch 3 rückbezogen ist, bei der die Leitungseinrichtungen, die von der besagten Struktur gebildet werden, um mit der Zylinderkammer (13A; 113A) in Verbindung zu stehen, einen eingeschränkten Strömungsweg zwischen dem ringförmigen Zylinderraum (61A; 161A) auf der gegenüberliegenden Seite des Kolbenkopfes (11A; 111A) und der Zylinderkammer (13A; 113A) zu bilden, der an den Ventilen (96; 196) vorbeiführt, wenn er offen ist.

19. Hydropneumatische Puffervorrichtung nach Anspruch 18, bei der die von der besagten Struktur gebildeten Leitungsmittel für eine Verbindung mit der Zylinderkammer (13A; 113A) die zylindrische Kammer (13A; 113A) mit geschlossenem Ende in eine eingeschränkte Verbindung mit dem ringförmigen Zylinderraum (61A; 161A) auf der der Zylinderkammer (13A; 113A) gegenüberliegenden Seite des Kolbenkopfes (11A; 111A) setzen.

20. Hydropneumatische Puffervorrichtung nach Anspruch 19, bei der die Leitungsmittel, die von der besagten Struktur gebildet werden, um eine Verbindung mit der Zylinderkammer (73A; 113A) herzustellen, durch Kolbenmittel (77; 177) geschlossen sind, die von dem Dosierstift getragen werden und in der zylindrischen Kammer (74; 174A) verschiebbar sind.

## Revendications

1. Dispositif d'amortissement hydropneumatique à utiliser dans un dispositif d'absorption d'énergie, tel qu'une extrémité d'un attelage de voiture pour un véhicule de chemin de fer, le dispositif d'amortissement comprenant une structure formant une chambre de cylindre (13 ; 13A ; 113A) qui est dotée de deux extrémités, l'une étant fermée (14 ; 14A ; 114A) et remplie de fluide hydraulique lorsque le dispositif est en fonctionnement, un réservoir de fluide hydraulique, des moyens de réglage qui fournissent une communication réglée entre la chambre de cylindre (13 ; 13A ; 113A) et le réservoir, un piston (10 ; 10A ; 110A) comprenant une tête de piston (11 ; 11A ; 111A) qui peut coulisser à l'intérieur de l'alésage de la chambre de cylindre et une tige de piston (12 ; 12A ; 112A) qui peut coulisser à l'intérieur d'une structure (48 ; 48A ; 148A) qui forme l'autre extrémité de la chambre de cylindre, l'agencement étant tel que le mouvement du piston (10 ; 10A ; 110A) s'éloignant d'un emplacement à l'intérieur de la chambre de cylindre (13 ; 13A ; 113A), que le piston (10 ; 10A ; 110A) adopte lorsque le dispositif n'est pas chargé, déplace du fluide hydraulique de la chambre de cylindre (13 ; 13A ; 113A) vers le réservoir au travers desdits moyens de réglage, où se trouve un espace (62 ; 62A ; 162A), qui est rempli de gaz lorsque le dispositif est en fonctionnement et qui est disposé de façon à ce que le gaz agisse par l'intermédiaire du fluide hydraulique pour pousser le piston (10 ; 10A ; 110A) en direction dudit emplacement lorsque le dispositif n'est pas chargé, **caractérisé en ce que** le dispositif comprend des moyens de soupape unidirectionnelle utilisables pour permettre l'écoulement de fluide hydraulique du réservoir vers la chambre de cylindre (13 ; 13A ; 113A), et **en ce que** des moyens de butée chargés de façon élastique sont prévus à l'intérieur de la chambre de cylindre (13 ; 13A ; 113A) entre la tête de piston (11 ; 11A ; 111A) et la structure (48 ; 48A ; 148A) qui forme ladite autre extrémité de la chambre de cylindre (13 ; 13A ; 113A), les moyens de butée étant utilisables pour être mis en butée par la tête de piston (11 ; 11A ; 111A) à mesure qu'elle se déplace en direction de l'autre extrémité, moyennant quoi ledit emplacement est établi comme position neutre prédéterminée de la tête de piston (11 ; 11A ; 111A) espacée de la structure (48 ; 48A ; 148A) qui forme ladite autre extrémité de la chambre de cylindre (13 ; 13A ; 113A) et pour être déplacés contre la charge élastique par le mouvement de la tête de piston (11 ; 12A ; 111A) dans la direction de traction, moyennant quoi le dispositif peut absorber de l'énergie dans la direction de traction.

2. Dispositif d'amortissement hydropneumatique selon la revendication 1 comprenant des moyens utilisables pour réduire la vélocité du piston (10 ; 10A ; 110A) lorsqu'il approche de la position neutre prédéterminée.

3. Dispositif d'amortissement hydropneumatique selon la revendication 2, dans lequel les moyens utilisables pour réduire la vélocité du piston (10 ; 10A ; 110A) comprennent des moyens de canalisation formés par ladite structure de façon à communiquer avec ladite chambre de cylindre (13 ; 13A ; 113A) et des moyens utilisables pour limiter la communication entre lesdits moyens de canalisation et ladite chambre de cylindre (13 ; 13A ; 113A) lorsque ledit piston (10 ; 10A ; 110A) approche de la position neutre prédéterminée, une telle communication étant sensiblement illimitée lorsque le piston (10 ; 10A ; 110A) est sensiblement éloigné de ladite position neutre prédéterminée.

4. Dispositif d'amortissement hydropneumatique selon les revendications 1 à 3, dans lequel les moyens de butée comprennent un piston flottant (47 ;47A ; 147A) qui peut coulisser dans une cavité formée dans la structure (48 ; 48A ; 148A) qui forme ladite autre extrémité et qui est poussé en direction de ladite tête de piston (11 ; 11A ; 111A) par ladite charge élastique.

5. Dispositif d'amortissement hydropneumatique selon la revendication 4, dans lequel le piston flottant (47 ;47A ;147A) est tubulaire et la cavité est annulaire.

6. Dispositif d'amortissement hydropneumatique selon la revendication 5, dans lequel le piston flottant tubulaire (47 ;47A ;147A) peut coulisser sur la tige du piston (12 ; 12A ; 112A).

7. Dispositif d'amortissement hydropneumatique selon la revendication 5 ou 6, dans lequel le piston flottant tubulaire (47 ;47A ;147A) porte un piston annulaire (51 ; 51A ; 151A) qui coulisse à l'intérieur d'un autre espace de cylindre (58 ; 58A ; 158A) qui comprend une partie de ladite cavité et qui est isolé de ladite chambre de cylindre (13 ; 13A ; 113A) par la structure (48 ; 48A ; 148A) qui forme ladite autre extrémité.

8. Dispositif d'amortissement hydropneumatique selon l'une quelconque des revendications 1 à 7, dans lequel une paroi au moins partiellement déplaçable est prévue comme limite dudit espace (62 ; 62A ; 162A), moyennant quoi ledit espace (62 ; 62A ; 162A) est séparé du fluide hydraulique dans le réservoir.

9. Dispositif d'amortissement hydropneumatique selon la revendication 8, dans lequel ledit espace (62 ; 62A ; 162A) est une autre chambre de cylindre (19 ; 19A ; 119A) qui est formée dans l'extrémité fermée (14 ; 14A ; 114A) de la première chambre de cylindre mentionnée (13 ; 13A ; 113A) et ladite paroi au moins partiellement déplaçable comprend un piston flottant (25 ; 25A ; 125A) qui est coulissant à l'intérieur de cette autre chambre de cylindre (14 ; 14A ; 114A).

10. Dispositif d'amortissement hydropneumatique selon l'une quelconque des revendications 8 et 9 lorsqu'elles dépendent de la revendication 7, dans lequel des moyens de canalisation sont prévus, moyennant quoi ledit autre espace de cylindre (58 ; 58A ; 158A) sur le côté dudit piston annulaire (51 ; 51A ; 151A) éloigné de ladite chambre de cylindre (13 ; 13A ; 113A) est en communication avec le côté de ladite paroi au moins partiellement déplaçable éloigné dudit espace (62 ; 62A ; 162A).

11. Dispositif d'amortissement hydropneumatique selon l'une quelconque des revendications 8 à 10, dans lequel le réservoir est une chambre annulaire (29) qui entoure de façon coaxiale ladite chambre de cylindre (13) et lesdits moyens de réglage comprennent des trous calibrés dans la paroi cylindrique de la chambre de cylindre (13) qui sont espacés les uns des autres dans une direction qui est parallèle à l'axe de la chambre de cylindre (13), des moyens de canalisation (24) étant formés dans la structure (17) qui forme l'extrémité fermée (14) de la chambre de cylindre (13), moyennant quoi la chambre annulaire (29) communique avec le côté de ladite paroi au moins partiellement déplaçable éloigné dudit espace (62).

12. Dispositif d'amortissement hydropneumatique selon la revendication 11 lorsqu'elle dépend de la revendication 3, dans lequel lesdits moyens de canalisation (59), qui communiquent avec ledit espace de cylindre (13), mettent l'espace de cylindre (13) et la chambre annulaire coaxialement environnante (29) en communication lorsque le piston (11) est déplacé sensiblement à partir de la position neutre prédéterminée.

13. Dispositif d'amortissement hydropneumatique selon la revendication 11 ou 12, dans lequel une soupape (34A ; 34B ; 34C) est ajustée dans chaque trou calibré, chaque soupape (34A ; 34B ; 34C) étant utilisable pour entraver le passage de fluide hydraulique au travers du trou calibré respectif lorsqu'une force, qui est inférieure à un seuil prédéterminé, est appliquée pour pousser le piston (11) axialement à l'intérieur de la chambre de cylindre (13) et pour s'ouvrir afin de permettre le déplacement de fluide hydraulique entre la chambre de cylindre (13) et le réservoir lorsqu'une force, qui est supérieure au seuil prédéterminé, est appliquée pour pousser le piston (11) dans la chambre de cylindre (13).

14. Dispositif d'amortissement hydropneumatique selon l'une quelconque des revendications 8 à 10, dans lequel une partie du réservoir est formée entre ladite chambre de cylindre (13A ; 113A) et ledit espace (62A ; 162A) duquel elle est séparée par ladite paroi au moins partiellement déplaçable et les moyens de réglage comprennent au moins une soupape (95, 96 ; 195, 196) qui est utilisable pour entraver le passage de fluide hydraulique au travers d'un orifice respectif lorsqu'une force, qui est inférieure à un seuil prédéterminé, est appliquée pour pousser le piston (10A ; 110A) axialement à l'intérieur de la chambre de cylindre (13A ; 113A) et pour s'ouvrir afin de permettre le déplacement de fluide hydraulique entre la chambre de cylindre (13A ; 113A) et le réservoir au travers dudit orifice lorsqu'une force, qui est supérieure au seuil prédéterminé, est appliquée pour pousser le piston (10A ; 110A) dans la chambre de cylindre (13A ; 113A), l'orifice étant formé dans la structure (89 ; 189) qui sépare le réservoir de ladite chambre de cylindre (13A ; 113A).

15. Dispositif d'amortissement hydropneumatique selon la revendication 13 ou 14, dans lequel la soupape ou chaque soupape (95, 96 ; 195, 196) comprend un organe d'obturation qui est un piston à différentiel de zones (97, 97B ; 197, 197B), dont la zone de surface plus grande est exposée vers l'intérieur du réservoir et dont la partie d'extrémité de diamètre plus petit est conçue pour être placée sur le périmètre du trou ou de l'orifice respectif lorsque la soupape ferme ce trou ou cet orifice.

16. Dispositif d'amortissement hydropneumatique selon la revendication 14 ou 15, dans lequel les moyens de réglage comprennent en outre une tige de dosage qui est montée dans la structure (89 ; 189) qui sépare le réservoir de ladite chambre de cylindre (13A ; 113A) et qui fait saillie de façon coaxiale dans une chambre cylindrique fermée à son extrémité (74 ; 174) formée dans le piston (10A ; 110A), la tige de dosage coopérant avec l'ouverture de la chambre de cylindre fermée à son extrémité (74 ; 174) pour fournir un réglage dépendant de la vélocité de l'écoulement de fluide dans la chambre de cylindre fermée à son extrémité (74 ; 174).

17. Dispositif d'amortissement hydropneumatique selon la revendication 16, dans lequel la tige de dosage comprend le tube extérieur (78 ; 178) de deux tubes, le tube intérieur (79 ; 179) s'étendant à l'intérieur du tube extérieur (78 ; 178), l'espace annulaire (85 ; 185) entre les deux tubes étant en communication avec le réservoir au travers d'une dite soupape (95 ; 195), pour établir un chemin d'écoulement pour un écoulement réglé de fluide déplacé depuis ladite chambre de cylindre (13A ; 113A) lorsque le dispositif est actionné en poussée et le creux du tube interne (79 ; 179) étant en communication avec le réservoir via une autre dite soupape (96 ; 196), pour établir, avec des orifices de dimensions de régulation d'écoulement qui règlent l'écoulement dans ladite chambre cylindrique fermée à son extrémité (74 ; 174), à partir des espaces de cylindre (58A, 61A ; 158A, 161A) sur le côté opposé de la tête de piston (11A ; 111A) dudit piston (10A ; 110A), à partir de ladite chambre de cylindre ( 13A ; 113A), un chemin d'écoulement pour un écoulement réglé de fluide déplacé à partir desdits espaces de cylindre (58A, 61A ; 158A, 161A) sur le côté opposé de la tête de piston (11A ; 111A) vers le réservoir lorsque le dispositif est actionné en traction, des moyens de soupape unidirectionnelle étant prévus pour permettre l'écoulement depuis le réservoir vers les espaces de cylindre respectifs (13A, 58A, 61A ; 113A, 158A, 161A) sur l'un ou l'autre des côtés de la tête de piston (11A ; 111A).

18. Dispositif d'amortissement hydropneumatique selon la revendication 17 lorsqu'elle dépend de la revendication 3, dans lequel lesdits moyens de canalisation, formés par ladite structure de façon à communiquer avec ladite chambre de cylindre (13A ; 113A), fournissent un chemin d'écoulement limité entre l'espace de cylindre annulaire ( 61A ; 161A) sur le côté opposé de ladite tête de piston (11A ; 111A) et ladite chambre de cylindre (13A ; 113A) qui contourne lesdites soupapes ( 96 ; 196) lorsqu'elle est ouverte.

19. Dispositif d'amortissement hydropneumatique selon la revendication 18, dans lequel lesdits moyens de canalisation, formés par ladite structure de façon à communiquer avec ladite chambre de cylindre ( 13A ; 113A), mettent ladite chambre cylindrique fermée à son extrémité (13A ; 113A) en communication limitée avec l'espace de cylindre annulaire (61A ; 161A) sur le côté opposé de ladite tête de piston (11A ; 111A) à partir de ladite chambre de cylindre (13A ; 113A).

20. Dispositif d'amortissement hydropneumatique selon la revendication 19, dans lequel lesdits moyens de canalisation, formés par ladite structure de façon à communiquer avec ladite chambre de cylindre (13A ; 113A), sont fermés par des moyens de piston (77 ; 177) supportés par ladite tige de dosage et peuvent coulisser dans ladite chambre de cylindre fermée à son extrémité (74 ; 174A).
